# DEMANDE DE BREVET EUROPEEN

(11) **EP 4 550 529 A1**
(43) Date de publication de la demande: **07.05.2025**
(21) Numéro de dépôt: 24209929.9
(22) Date de dépôt: 30.10.2024
(51) Int. Cl.: H01M 10/625, H01M 10/6554, H01M 10/6556, H01M 10/6568, H01M 50/204, F28D 9/00, H01M 10/613, F28F 13/12, F28F 9/02

(54) **DISPOSITIF DE REFROIDISSEMENT POUR UNE BATTERIE ÉLECTRIQUE**

(30) Priorité: 31.10.2023 FR 2311875
(71) Demandeur: HUTCHINSON, 75008 Paris (FR)
(72) Inventeur: MOUNIER, Jean-Yves, 45200 PAUCOURT (FR); MORETTI, Nicola, 10090 GASSINO TORINESE (TO) (IT); VIROGLIO, Franco, 10034 CHIVASSO (TO) (IT)
(74) Mandataire: Ernest Gutmann - Yves Plasseraud S.A.S.

(57) **Abrégé**

Dispositif de refroidissement pour une batterie, comprenant :
- une enveloppe formée de deux feuillets de matériau souple,
- un conduit de circulation,
- un orifice d'entrée de fluide et un orifice de sortie, et
- au moins un connecteur fluidique (50) disposé à travers l'orifice d'entrée ou de sortie, comprenant :
- une embase (80) comprenant :
- un socle (82) définissant une ouverture centrale (90) traversante, le socle (82) définissant une face supérieure (92) disposée contre une face interne du feuillet (36),
- un tube (84) solidaire du socle, s'étendant à travers l'orifice d'entrée ou l'orifice de sortie et débouchant à travers l'ouverture centrale,

- une bague (88) assemblée sur l'embase et entourant circonférentiellement le tube, disposée en appui contre une face externe du feuillet,

la face supérieure du socle étant fixée à la face interne du feuillet par au moins une soudure entourant circonférentiellement le tube.

## Description

### Domaine technique de l'invention

L'invention concerne le domaine technique des batteries électriques, et plus précisément celui du refroidissement desdites batteries. Lesdites batteries sont par exemple installées sur un véhicule à propulsion électrique ou hybride.

A ce titre, l'invention concerne un dispositif de refroidissement pour une batterie électrique. L'invention concerne également une batterie électrique comprenant un tel dispositif de refroidissement.

### Etat de la technique antérieure

Dans une batterie électrique à cellules, c'est-à-dire une batterie comprenant plusieurs éléments de batterie indépendants regroupés dans une enceinte, les éléments les plus chauds sont situés au centre de celui-ci. Comme les éléments sont généralement disposé en contact les uns avec les autres par leurs faces latérales, par souci de réduction de l'encombrement global, la chaleur que génèrent ces éléments les plus enclavés est uniquement évacuée au niveau de leurs faces inférieures.

Le refroidissement fluide indirect est la méthode la plus couramment utilisée par les constructeurs car elle est efficace, assez simple à mettre en place et peu coûteuse. Cette méthode consiste à faire circuler un fluide de refroidissement (généralement un mélange eau-glycol) dans un dispositif de refroidissement situé sous les éléments de batterie. Le fluide joue un rôle de caloporteur et vient prélever des calories thermiques dans la batterie pour les évacuer en dehors de l'enceinte au cours de sa circulation.

Par conséquent, l'évacuation de la chaleur est fortement dépendante de la résistance thermique d'échange entre la face inférieure des éléments de batterie et le dispositif de refroidissement.

Afin d'améliorer cette résistance thermique d'échange, il est connu d'utiliser des matériaux d'interface thermique, comme des résines thermo conductrices, entre la plaque froide du dispositif de refroidissement et les surfaces inférieures des éléments de batterie, pour combler les écarts locaux entre ces surfaces dus aux aspérités de ces structures solides et à leur rugosité. Une telle solution augmente cependant de manière notable le coût et la masse de la batterie. De plus, le contact thermique permis par l'utilisation d'un tel matériau d'interface reste nettement moins efficace qu'un contact mécanique direct entre des matériaux métalliques conducteurs.

Une autre possibilité pour améliorer le contact thermique est l'emploi d'une enveloppe souple pour la circulation du fluide caloporteur à la place d'une structure rigide, ladite enveloppe souple se déformant librement sous l'effet de la pression de circulation du fluide caloporteur et venant alors épouser les contours de la surface inférieure des éléments de batterie, procurant par là un bon contact thermique.

L'enveloppe souple est conçue à l'aide de deux feuillets de film multi matériau et multicouches assemblées par soudage local de manière à former un ou plusieurs canaux de circulation de fluide. Les deux feuillets peuvent être séparés ou bien formés par une unique feuille repliée sur elle-même.

Une telle enveloppe permet ainsi d'avoir un dispositif de refroidissement bénéficiant d'un bon contact thermique avec les éléments de batterie à refroidir, tout en étant léger et de fabrication simple par rapport à des refroidisseurs rigides antérieurs.

Cependant, le raccord d'une enveloppe réalisée en matériau souple à un circuit de distribution de fluide de refroidissement, comprenant des éléments de tuyauterie rigide, peut poser des problèmes d'étanchéité, notamment sur le long terme et lors de variations thermiques importantes de l'environnement proche des connecteurs.

### Présentation de l'invention

L'invention vise à remédier à ces inconvénients en fournissant un dispositif de refroidissement pour batterie utilisant une enveloppe souple pour la circulation du fluide de refroidissement et présentant une étanchéité améliorée et mieux garantie dans le temps.

A cet effet, l'invention a pour objet un dispositif de refroidissement pour une batterie électrique, le dispositif de refroidissement comprenant :
- une enveloppe formée de deux feuillets de matériau souple s'étendant en regard l'un de l'autre, les feuillets présentant des régions de soudure dans lesquelles les feuillets sont solidaires l'un de l'autre et des régions de séparation dans lesquelles les feuillets sont aptes à s'étendre l'écart l'un de l'autre,
- au moins un conduit de circulation de fluide s'étendant entre les feuillets à travers au moins l'une des régions de séparation,
- au moins un orifice d'entrée de fluide défini dans l'un des feuillets et au moins un orifice de sortie de fluide définit dans l'un des feuillets, et
- au moins un connecteur fluidique, chaque connecteur fluidique étant disposé à travers l'au moins un orifice d'entrée ou l'au moins un orifice de sortie, monté de manière fixe au feuillet correspondant,
   caractérisé en ce que chaque connecteur fluidique comprend :
- une embase comprenant :
   - un socle définissant une ouverture centrale traversante, le socle définissant une face supérieure disposée contre une face interne du feuillet correspondant, et
   - un tube solidaire du socle, s'étendant à travers l'orifice d'entrée ou l'orifice de sortie et débouchant à travers l'ouverture centrale du socle,
- une bague assemblée sur l'embase et entourant circonférentiellement le tube, la bague étant disposée en appui contre une face externe du feuillet, la face supérieure du socle étant fixée à la face interne du feuillet par au moins une soudure entourant circonférentiellement le tube.

Un tel dispositif de refroidissement permet une connexion fluidique de l'enveloppe souple à un circuit de distribution de fluide de refroidissement qui permet une étanchéité améliorée et mieux garantie dans le temps.

Chaque connecteur fluidique peut comprendre au moins une nervure s'étendant sur le socle, en contact avec la face interne du feuillet et entourant circonférentiellement le tube, chaque nervure définissant une ligne de crête par laquelle l'embase est fixée au feuillet par soudage. Une telle caractéristique permet d'avoir des lignes de soudure précises et simples à réaliser par soudure thermique sur les lignes de crête des nervures.

Le socle peut présenter une forme générale de disque, et chaque nervure peut s'étendre sur un contour circulaire centré sur l'ouverture centrale du socle.

Une telle caractéristique permet de former plus facilement les soudures entre le socle et le feuillet et d'avoir une meilleure tenue mécanique de ces soudures.

Le connecteur peut comprendre de plus au moins un joint torique disposé entre le socle de l'embase et la face interne du feuillet, la bague exerçant un effort sur le joint torique à travers le feuillet.

Une telle caractéristique permet de renforcer encore l'étanchéité du connecteur en ajoutant un deuxième moyen d'étanchéité complémentaire des soudures.

L'embase peut comprendre au moins deux nervures espacées radialement l'une par rapport à l'autre relativement au tube et étant fixées au feuillet par leurs lignes de crête respectives les au moins deux des nervures définissant entre elles une gorge annulaire recevant le joint torique.

Une telle caractéristique améliore encore l'étanchéité et la durabilité du connecteur, en ajoutant une seconde ligne de soudure, et simplifie la mise en place et le maintien en position du joint torique.

Une surface interne de la bague et une surface externe du tube peuvent présenter des filetages correspondants, agencés pour permettre la fixation de la bague à l'embase.

Une telle caractéristique permet un assemblage simplifié et réversible de la bague sur le tube et un bon maintien en pression du joint torique.

La bague et le tube peuvent présenter des moyens d'encliquetage correspondants, agencés pour permettre la fixation de la bague à l'embase.

Une telle caractéristique permet un assemblage simplifié et réversible de la bague sur le tube et un bon maintien en pression du joint torique.

Lesdits moyens d'encliquetage peuvent comprendre une pluralité de dents réparties circonférentiellement sur la surface externe du tube et s'étendant en saillie radialement depuis ladite surface externe, et, préférentiellement, un même nombre d'indentations correspondantes définies par la bague.

Une telle caractéristique permet d'avoir un effort mécanique réparti radialement, améliorant ainsi la durabilité et l'étanchéité du connecteur.

Une surface interne du tube peut présenter des reliefs agencés pour générer des turbulences dans un écoulement de fluide à travers le tube.

Une telle caractéristique permet d'améliorer le brassage du fluide de refroidissement dans le conduit d'écoulement et ainsi d'augmenter l'efficacité du refroidissement. Notamment, ces reliefs permettent de prévenir l'apparition d'une couche immobile de fluide le long des parois qui réduirait l'efficacité du transfert thermique en remélangeant cette couche de fluide dans l'écoulement central.

Les reliefs peuvent présenter des formes de rampes s'étendant sur la surface interne du tube selon une direction transverse à une direction d'élongation local du tube, en saillie vers l'intérieur du tube.

Une telle caractéristique permet d'avoir des reliefs simples à mettre en forme et présentant une bonne durabilité, et favorise le mélange du fluide périphérique vers le centre de l'écoulement.

L'invention concerne également une batterie électrique comprenant :
- une pluralité d'éléments de batterie disposés dans une enceinte,
- un dispositif de circulation de fluide de refroidissement, et
- un dispositif de refroidissement comme plus haut, chaque connecteur fluidique du dispositif de refroidissement étant connecté fluidiquement au dispositif de circulation de fluide de refroidissement,
l'enveloppe étant disposée pour entrer en contact avec des éléments à refroidir des éléments de batterie lorsqu'un fluide de de refroidissement circule dans l'au moins un conduit de circulation.

### Brève description des figures

[Fig. 1] est une vue en perspective éclatée des principaux éléments d'une batterie électrique selon l'invention,
[Fig. 2] est une vue en perspective éclatée d'un dispositif de refroidissement de la batterie de la figure 1,
[Fig. 3] est une vue en coupe transversale du dispositif de refroidissement de la figure 2,
[Fig. 4] est une vue en perspective de détail montrant des moyens d'assemblage d dispositif de refroidissement des figures 1 et 2,
[Fig. 5] est une vue en perspective d'une embase d'un connecteur fluidique du dispositif de refroidissement des figures 2 à 4,
[Fig. 6] est une vue en perspective de l'embase de la figure 5 portant un joint torique,
[Fig. 7] est une vue en perspective du connecteur fluidique des figures 5 et 6 assemblé, et
[Fig. 8] est une vue en coupe du connecteur des figures 5 à 7.

### Description détaillée de l'invention

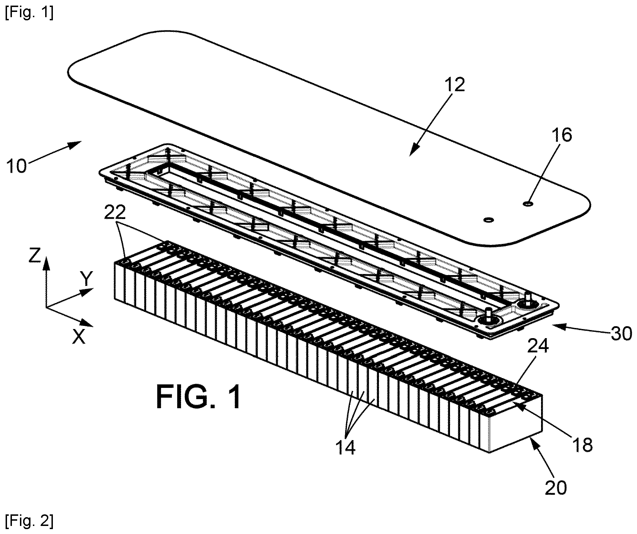

La figure 1 représente une batterie 10 électrique destinée au stockage d'énergie, destinée notamment aux applications embarquées sur un véhicule, par exemple un véhicule à propulsion électrique ou hybride.

Ledit véhicule est par exemple un véhicule automobile, un véhicule de transport sur route ou ferroviaire, un véhicule maritime, ou autre.

Alternativement, la batterie 10 est destinée à une installation fixe ou mobile nécessitant un apport d'énergie électrique, sans raccord au réseau d'alimentation, ou en complément de celui-ci.

La batterie comprend une enceinte 12 fermée, sensiblement étanche (seul le couvercle en est représenté sur les figures par souci de clarté), et une pluralité d'éléments de batterie 14, ou cellules, disposées dans l'enceinte 12 et propres à stocker l'énergie électrique.

L'enceinte 12 comprend un couvercle supérieur amovible, partiellement représenté sur la figure 1, qui définit des orifices de passage 16 destinés à l'alimentation en fluide de refroidissement.

Chaque élément de batterie 14 présente une forme générale sensiblement parallélépipédique et définit ainsi une face supérieure 18, une face inférieure 20 et quatre faces latérales.

Les expressions « supérieure » et « inférieure » sont entendues ici relativement à un positionnement standard de la batterie en condition de fonctionnement.

Les éléments de batterie 14 sont disposés alignés selon au moins une rangée s'étendant selon une direction d'alignement X. On définit de plus une direction d'élévation Z et une direction transversale Y, toutes deux perpendiculaires entre elles et perpendiculaires à la direction d'alignement X, la direction d'élévation Z étant orienté sensiblement verticalement dans une orientation de fonctionnement standard de la batterie 10.

Les éléments de batterie 14 peuvent être disposés en contact les uns avec les autres par leurs faces latérales respectives, selon la direction d'alignement X, ou bien avec des écarts faibles entre deux éléments de batterie voisins selon la direction d'alignement X.

Chaque élément de batterie 14 comporte des connecteurs 22 disposés sur sa face supérieure 18, de part et d'autre de ladite face supérieure selon la direction transversale Y. Les connecteurs 22 des éléments de batterie forment ainsi deux rangées s'étendant selon la direction d'alignement X.

Les connecteurs 22 des éléments de batterie 14 sont branchés à des barres omnibus 24 parallèles qui s'étendent sensiblement selon la direction d'alignement X, permettant l'apport d'énergie dans les éléments de batterie 14 pour le stockage ou le retrait d'énergie des éléments de batterie pour alimenter un dispositif électrique.

La batterie 10, et plus particulièrement les éléments de batterie 14, génèrent de la chaleur en fonctionnement et nécessitent un refroidissement pour un fonctionnement optimal et pour avoir une durée de bon fonctionnement et une sécurité satisfaisante.

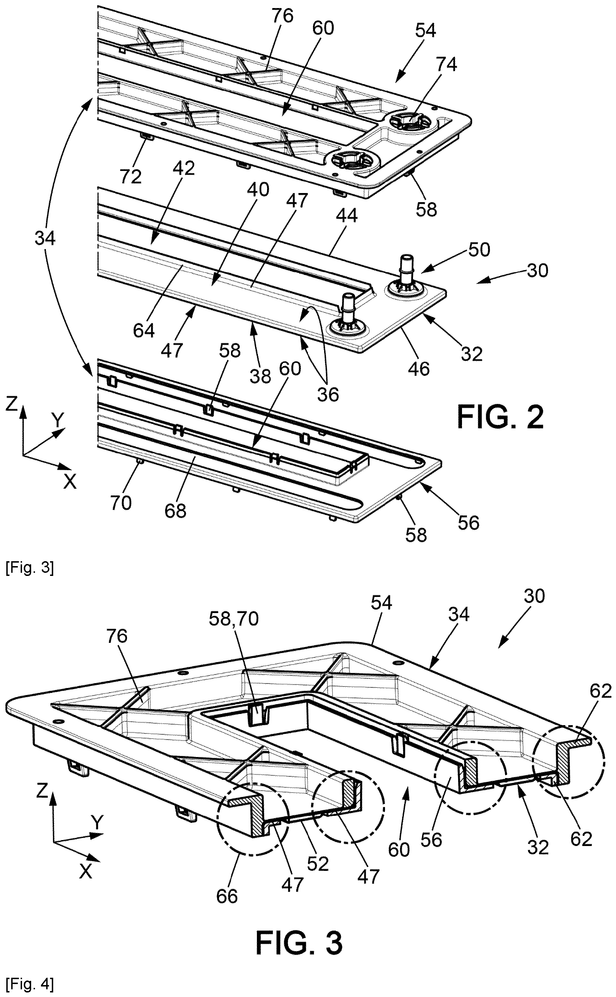

Pour cela, la batterie 10 comprend au moins un dispositif de refroidissement 30 d'éléments à refroidir de la batterie, représenté plus en détail sur les figures 2 à 4.

Les éléments à refroidir peuvent être les éléments de batterie 14, et plus spécifiquement les faces inférieures 20 ou latérales des éléments de batterie, ou encore les connecteurs 22 des éléments de batterie ainsi que les barres omnibus 24, qui sont disposés au-dessus des faces supérieures des éléments de batterie.

Dans l'exemple représenté sur les figures, le dispositif de refroidissement 30 est ainsi agencé pour refroidir les connecteurs 22 des éléments de batterie et les barres omnibus 24, et est ainsi positionné dans l'enceinte 12, suspendu au couvercle, au-dessus des éléments de batterie 14.

Le dispositif de refroidissement 30 comprend une enveloppe 32 souple destinée à accueillir le fluide de refroidissement, ainsi qu'une structure de support 34 adaptées pour améliorer la rigidité et la résistance du dispositif de refroidissement 30.

L'enveloppe 32 est formée de deux feuillets 36 de matériau souple s'étendant en regard l'un de l'autre et soudés en partie l'un à l'autre.

Ainsi, l'enveloppe 32 présente des régions de soudure 38, dans lesquelles les feuillets 36 sont solidaires l'un de l'autre, et des régions de séparation 40, dans lesquelles les feuillets 36 ne sont pas soudés l'un à l'autre et sont ainsi aptes à s'étendre l'écart l'un de l'autre, définissant entre eux un espace interne.

Les régions de soudure 38 suivent notamment un contour externe de l'enveloppe 32, de manière à rendre un espace interne de l'enveloppe 32 étanche.

Les feuillets 36 sont formés à partir d'un film multicouche découpé pour obtenir la géométrie souhaitée.

Le film est par exemple un empilement de couches comme suit : une première couche de polyéthylène téréphtalate (PET), une couche d'aluminium (Al), une deuxième couche de polyéthylène téréphtalate et une couche de polyéthylène (PE). Ce type de film est couramment utilisé dans l'industrie alimentaire, pour une isolation avantageuse des produits.

Dans le cas de l'enveloppe souple 32, la couche d'aluminium procure une très bonne conductivité thermique et réduit les risques de perméation de fluide à travers les feuillets, les couches de polyéthylène téréphtalate apportent une bonne tenue à la température et au milieu ambiant, et la couche de polyéthylène sert de couche adhésive, pour la fixation des deux feuillets par fusion des deux couches de polyéthylène en contact l'une de l'autre.

Dans l'exemple représenté, l'enveloppe 32 souple présente une forme sensiblement rectangulaire et définit une ouverture centrale 42 rectangulaire. La forme rectangulaire de l'enveloppe 32 comprend par exemple deux grands côtés 44, qui s'étendent selon la direction d'alignement X, et deux petits côtés 46, qui s'étendent selon la direction transversale Y. L'enveloppe 32 définit des bords latéraux 47, notamment des bords latéraux 47 externes s'étendant le long des grands côtés et des petits côtés, ainsi que des bords latéraux 47 internes longeant l'ouverture centrale 42.

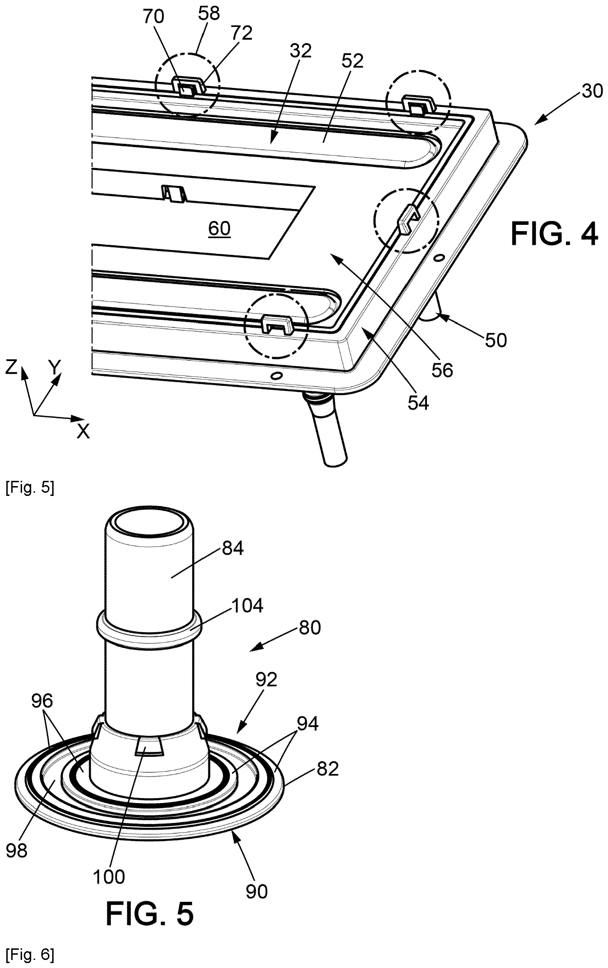

Le dispositif de refroidissement 30 comprend en outre au moins un connecteur fluidique 50 d'entrée et au moins un connecteur fluidique 50 de sortie, disposés dans l'enveloppe et au moins un conduit 52 de circulation de fluide, représenté sur les figures 3 et 4, s'étendant entre les feuillets 36 de l'enveloppe depuis l'au moins un connecteur 50 d'entrée jusqu'à l'au moins un connecteur 50 de sortie.

Les régions de séparations 40 des feuillets 36 définissent ensemble ledit au moins un conduit de circulation 52 de fluide dans l'espace interne.

Dans l'exemple représenté, les connecteurs fluidiques 50 d'entrée et de sortie sont positionnés au niveau d'un même côté de la forme rectangulaire de l'enveloppe 32.

Par exemple, les deux connecteurs fluidiques 50 sont positionnés sur un même petit côté 46 de la forme rectangulaire de l'enveloppe 32, c'est-à-dire au niveau d'une même extrémité de l'enveloppe 32 selon la direction d'alignement X, et de part et d'autre de ladite forme rectangulaire selon la direction transversale Y.

Dans l'exemple représenté, l'enveloppe 32 comprend un unique conduit de circulation 52 de fluide présentant une forme en U, c'est-à-dire que le conduit 52 s'étend depuis le connecteur 50 d'entrée le long d'un des grands côtés 44, puis du petit côté 46 opposé aux connecteurs 50, et le long de l'autre des grands côtés 44 jusqu'au connecteur de sortie.

Plus généralement, le conduit 52 s'étend selon un parcours formant au moins un aller-retour sur l'enveloppe 32, afin de longer les deux rangées de connecteurs 22 des éléments de batterie 14 et de permettre la connexion fluidique de l'entrée et de la sortie au niveau du même bord latéral 47 de l'enveloppe 32.

Le conduit 52 peut également s'étendre selon un parcours serpentant sur l'étendue de l'enveloppe 32, c'est-à-dire formant au moins un méandre, ce qui permet d'augmenter la surface refroidie.

Ainsi, le conduit 52 peut présenter une forme en V, en W, etc...

Alternativement, l'enveloppe 32 peut comprendre plusieurs conduits 52 s'étendant de manière divergente depuis au moins un point d'entrée et se regroupant à au moins un point de sortie. Encore alternativement, l'enveloppe 32 peut comprendre une pluralité de conduits 52 séparés fluidiquement les uns des autres.

Notamment, l'enveloppe 32 peut comprendre deux conduits 52 sensiblement rectilignes et parallèles entre eux, s'étendant le long des deux rangées de connecteurs 22 et des barres 24, selon la direction d'alignement X.

Le dispositif de refroidissement 30 peut avantageusement comprendre en outre une structure de support 34 rigide pour l'enveloppe souple 32.

Les expressions « rigide » et « souple » s'entendent ici de manière relative l'une à l'autre. De plus, le caractère souple de l'enveloppe 32 implique que sans action externe, l'enveloppe se déforme sous l'effet de son propre poids, tandis que le caractère rigide de la structure de support 34 implique qu'elle ne subit pas de déformation notable sous l'effet de son propre poids.

La structure de support 34 comprend une première partie 54 et une deuxième partie 56, ainsi que des moyens d'assemblage 58 de la deuxième partie 56 et de la première partie 54. Dans l'exemple considéré, la structure de support 34 et l'enveloppe 32 sont destinée à être disposées au-dessus des éléments de batterie 14.

La première partie 54 est donc une partie supérieure, disposée au-dessus de la deuxième partie 56 selon la direction d'élévation Z, la deuxième partie 56 étant donc une partie inférieure. La deuxième partie 56 et la première partie 54 sont conformées pour enserrer au moins un des bords latéraux 47 de l'enveloppe 32 entre elles, lorsqu'elles sont assemblées.

Ainsi, l'enveloppe souple 32 est maintenue par ses bords latéraux 47, qui sont maintenus serrés en appui entre les première et deuxième parties 54, 56 de la structure de support 34. La première partie 54 et la deuxième partie 56 présentent par exemple chacune une forme de cadre rectangulaire plan, s'étendant perpendiculairement à la direction d'élévation Z, définissant une ouverture centrale 60, la première partie 54 et la deuxième partie 56 présentant ainsi des bords externes et des bords internes respectifs.

Avantageusement, la première partie 54 et la deuxième partie 56 comprennent des rebords 62 qui s'étendent le long de bords latéraux externes et/ou des bords latéraux internes, en saillie selon la direction d'élévation Z.

Avantageusement, l'enveloppe souple 32 peut comprendre des rabats 64 s'étendant le long des bords latéraux 47 internes de l'enveloppe 32 et longeant l'ouverture centrale 42, lesdits rabats 64 étant maintenus entre les rebords 62 de la première et de la deuxième partie de la structure de support 34. Ceci améliore encore le maintien de l'enveloppe souple entre les deux parties.

Avantageusement, les rebord 62 s'étendant le long des bords latéraux externes de la première partie 54 et de la deuxième partie 56 coopèrent pour former un rebord latéral 66 externe de la structure de support 34, agencé pour être positionné le long d'un contour externe de l'ensemble d'éléments de batteries 14, de manière à simplifier la mise en place du dispositif de refroidissement et à prévenir ses déplacements.

La deuxième partie 56 définit au moins un évidement 68 prévu pour s'ouvrir au niveau d'au moins une des régions de séparation 40 de l'enveloppe 32, de manière à permettre à l'enveloppe 32 de faire saillie hors de la structure de support 34 à travers ledit évidement 68. Chaque évidement 68 présente une forme identique à celle de l'un des conduits 52 de circulation de fluide. Ainsi, dans l'exemple représenté, l'évidement 68 est unique et présente une forme en U identique à celle du conduit 52 de circulation de fluide de l'enveloppe 32. Cela permet à l'enveloppe 32 de s'étendre en saillie à travers l'évidement 68 sur toute l'étendue du conduit 52, pour atteindre les éléments à refroidir.

Chaque évidement 68 présente par exemple une largeur sensiblement constante sur sa longueur, mesurée transversalement à la direction locale d'élongation de l'évidement 68 et du conduit 52 de fluide de refroidissement.

La première partie 54 est avantageusement fermée en regard de chaque évidement 68 de la deuxième partie 56. Ceci permet de maintenir une contrepression sur l'enveloppe souple 32 pour prévenir une extension dans une direction non-désirée.

Les moyens d'assemblage 58 de la deuxième partie 56 à la première partie 54 sont par exemple des moyens d'assemblage par encliquetage comprenant au moins une dent 70 s'étendant en saillie depuis un bord de l'une parmi la deuxième partie et la première partie et au moins une indentation 72 correspondante définie par l'autre de la deuxième partie et de la première partie.

Par exemple, les moyens d'assemblage 58 comprennent des indentations 72 réparties le long du rebord interne et du rebord externe de la première partie 54 et des dents 70 correspondantes réparties le long du rebord interne et du rebord externe de la deuxième partie 56.

Avantageusement, la structure de support 34 comprend en outre des moyens de fixation adaptés pour fixer la structure de support 34 au couvercle de l'enceinte 12 de batterie électrique.

Les moyens d'assemblage sont par exemple positionnés sur la première partie 54, le long du rebord externe.

Les moyens de fixation de la structure de support 34 peuvent également ou alternativement être adaptés pour fixer la structure de support 34 à une paroi latérale ou inférieure de l'enceinte 12.

Les moyens de fixation peuvent également ou alternativement être adaptés pour fixer la structure de support 34 aux éléments de batterie 14, notamment aux faces inférieures 20, latérales ou supérieure 18 des éléments de batterie 14.

Les moyens de fixation de la structure de support 34 sont par exemple des moyens de fixation par encliquetage, par vissage, ou des moyens articulés.

La première partie 54 définit moins un orifice 74 agencé pour permettre le passage de chaque connecteur fluidique 50 reliés à l'enveloppe 32. Dans l'exemple représenté qui comporte deux connecteurs 50, la première partie 54 définit deux orifices 74.

Les orifices 74 sont par exemple sensiblement circulaires, et coïncident avec des orifices de passage 16 correspondants définis dans l'enceinte 12, notamment dans le couvercle de l'enceinte 12.

Alternativement, au moins l'un des orifices 74 est défini par la deuxième partie 56, selon la configuration des connecteurs 50.

Avantageusement, la première partie 54 comprend au moins une nervure 76 de rigidification, propre à améliorer la raideur de la structure de support 34 en flexion.

Les nervures 76 s'étendent par exemple selon la direction d'élévation Z, avantageusement du rebord externe jusqu'au rebord interne de la première partie 54.

Dans l'exemple représenté, la première partie 54 comprend une pluralité de telles nervures 76 formant des croisillons.

La structure de support 34 est formée en matériau plastique, notamment par moulage séparé de la première partie 54 et de la deuxième partie 56.

Alternativement, la structure de support 34 peut être formée par estampage, ou par fabrication additive.

Alternativement, le dispositif de refroidissement 30 peut comprendre une structure de support simplifiée, comme un simple cadre rigide enserrant les bords latéraux externes de l'enveloppe 32, voire pas de structure de support 34, notamment lorsque l'enveloppe 32 est disposée dans un réceptacle ou bien directement au fond de l'enceinte 12, en contact avec les faces inférieures des éléments de batterie 14.

Selon l'invention, les connecteurs 50 fluidiques d'entrée et de sortie sont par exemple du type représenté sur les figures 5 à 8.

Les connecteurs fluidiques 50 sont disposés dans des orifices d'entrée ou de sortie respectifs ménagés dans les feuillets 36 formant l'enveloppe 32.

Chaque connecteur fluidique 50 comprend une embase 80 formée d'un socle 82 disposé intérieurement par rapport au feuillet 36 et d'un tube 84 solidaire du socle 82 et s'étendant à travers l'orifice du feuillet 36.

Le socle 82 est sensiblement perpendiculaire à la direction d'élévation dans l'exemple représenté, tandis que le tube 84 s'étend sensiblement selon la direction d'élévation Z. Chaque connecteur fluidique 50 comprend en outre une bague 88 assemblée à l'embase 80, en appui sur une surface externe du feuillet 36.

Avantageusement, chaque connecteur fluidique 50 comprend en outre au moins un joint torique 86, disposé entre le socle 82 de l'embase 80 et la face interne du feuillet 36.

Dans ce cas, la bague 88 comprime le feuillet et le ou lesdits joints toriques 86 contre l'embase 80.

Le socle 82 définit une ouverture centrale 90 traversante à travers laquelle le tube 84 débouche dans l'espace interne de l'enveloppe souple 32.

Par exemple, le socle 82 présente une forme générale de disque, concentrique avec l'ouverture centrale 90.

Le socle 82 définit en outre une face supérieure 92 par laquelle le connecteur 50 est fixé à la face interne du feuillet 36, par une soudure entourant circonférentiellement le tube 84 et s'étendant autour de l'orifice.

Par exemple, le connecteur 50 comprend pour cela au moins une nervure 94 définie sur le socle 82, entourant circonférentiellement le tube 84, et notamment au moins deux nervures 94 radialement espacées l'une de l'autre par rapport au tube 84.

Les nervures 94 font saillie depuis le socle 82 jusqu'à une ligne de crête 96, par laquelle elles sont fixées à la face interne du feuillet 36.

La fixation des nervures 94 au feuillet 36 est par exemple réalisée par soudage thermique de la ligne de crête 96 sur la couche de polyéthylène interne du feuillet 36.

Les nervures 94 sont par exemples sensiblement circulaires et concentriques. Avantageusement, les nervures 94 définissent entre elles au moins une gorge 98 de réception du joint torique 86.

Dans l'exemple représenté, l'embase 80 définit deux telles nervures 94, qui permettent d'avoir deux lignes de soudure au feuillet 36, et un unique joint torique 86 disposé dans la gorge 98 formée entre les deux nervures 94.

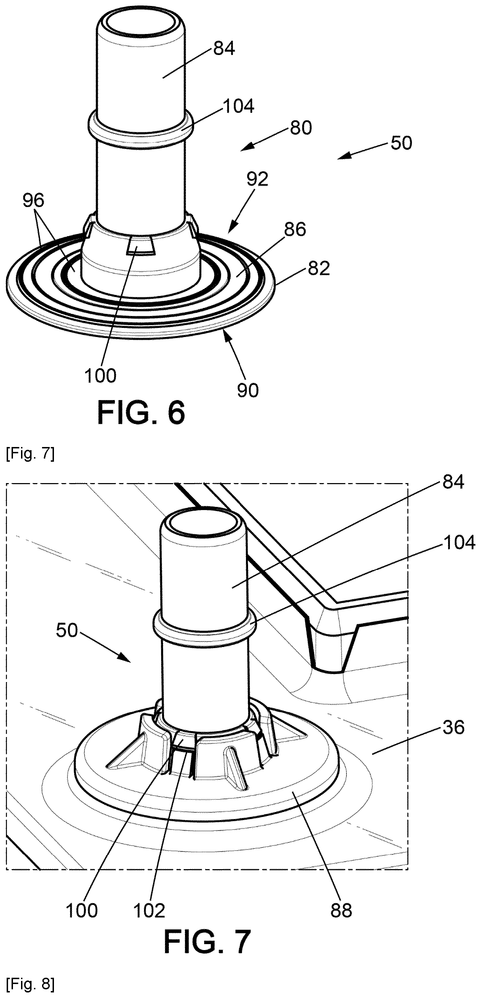

La bague 88, représentée sur la figure 7, est assemblée à l'embase, par exemple par vissage ou encliquetage, et entoure circonférentiellement le tube 84.

Dans l'exemple représenté, le tube 84 définit sur sa surface externe une pluralité de dents 100 régulièrement réparties autour de sa circonférence et qui font saillie radialement depuis le tube 84, tandis que la bague 88 définit un même nombre d'indentations 102 correspondantes, conformées pour recevoir les dents 100 par encliquetage lors de la fixation de la bague 88 à l'embase 80.

Alternativement, une surface externe du tube 84 peut définir un filetage et une surface interne de la bague 88 peut définir un filetage complémentaire, lesdits filetages permettant de fixer la bague 88 à l'embase 80 par vissage.

Ainsi, la bague 88 est disposée en appui contre une face externe du feuillet 36 et exerce un effort sur le joint torique 86 à travers le feuillet, ce qui permet d'avoir une étanchéité renforcée en plus des lignes de soudure aux nervures 94.

Le tube 84 peut également définir une nervure périphérique 104 de fixation d'un tuyau d'acheminement de fluide de refroidissement, qui s'étend à l'écart de la bague 88, du côté opposé au socle 82.

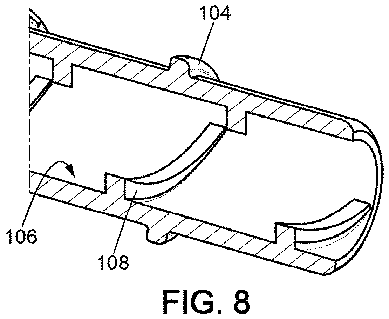

Avantageusement, comme représenté à la figure 8, une surface interne 106 du tube 84 présente des reliefs 108 agencés pour générer des turbulences dans un écoulement de fluide à travers le tube 84.

Lesdits reliefs 108 présentent par exemple des formes de rampes s'étendant sur la surface interne 106 du tube 84 selon une direction transverse à une direction d'élongation locale du tube 84, en saillie vers l'intérieur du tube 84.

De tels reliefs 108 permettent d'améliorer le brassage du fluide s'écoulant à travers le tube 84 et d'éviter la formation d'une couche de fluide stagnante le long de la surface interne 106, qui réduit l'efficacité du transfert thermique.

## Revendications

1. Dispositif de refroidissement (30) pour une batterie électrique, le dispositif de refroidissement (30) comprenant :
- une enveloppe (32) formée de deux feuillets (36) de matériau souple s'étendant en regard l'un de l'autre, l'enveloppe (32) présentant des régions de soudure (38) dans lesquelles les feuillets (36) sont solidaires l'un de l'autre et des régions de séparation (40) dans lesquelles les feuillets (36) sont aptes à s'étendre l'écart l'un de l'autre,
- au moins un conduit (52) de circulation de fluide s'étendant entre les feuillets (36) à travers au moins l'une des régions de séparation (40),
- au moins un orifice d'entrée de fluide défini dans l'un des feuillets (36) et au moins un orifice de sortie de fluide définit dans l'un des feuillets (36), et
- au moins un connecteur fluidique (50), chaque connecteur fluidique (50) étant disposé à travers l'au moins un orifice d'entrée ou l'au moins un orifice de sortie, monté de manière fixe au feuillet (36) correspondant,
**caractérisé en ce que** chaque connecteur fluidique (50) comprend :
- une embase (80) comprenant :
- un socle (82) définissant une ouverture centrale (90) traversante, le socle (82) définissant une face supérieure (92) disposée contre une face interne du feuillet (36) correspondant, et
- un tube (84) solidaire du socle (82), s'étendant à travers l'orifice d'entrée ou l'orifice de sortie et débouchant à travers l'ouverture centrale (90) du socle (82),
- une bague (88) assemblée sur l'embase (80) et entourant circonférentiellement le tube (84), la bague (88) étant disposée en appui contre une face externe du feuillet (36),
la face supérieure du socle (82) étant fixée à la face interne du feuillet (36) par au moins une soudure entourant circonférentiellement le tube (84).

2. Dispositif de refroidissement (30) selon la revendication 1, dans lequel chaque connecteur fluidique (50) comprend au moins une nervure (94) s'étendant sur le socle (82), en contact avec la face interne du feuillet (36) et entourant circonférentiellement le tube (84), chaque nervure (94) définissant une ligne de crête (96) par laquelle l'embase (82) est fixée au feuillet (36) par soudage.

3. Dispositif selon la revendication 2, dans lequel le connecteur comprend de plus au moins un joint torique (86) disposé entre le socle (82) de l'embase (80) et la face interne du feuillet (36), la bague (88) exerçant un effort sur le joint torique (86) à travers le feuillet (36).

4. Dispositif de refroidissement (30) selon la revendication 3, dans lequel l'embase (80) comprend au moins deux nervures (94) espacées radialement l'une par rapport à l'autre relativement au tube (82) et étant fixées au feuillet (36) par leurs lignes de crête (96) respectives, les au moins deux des nervures (94) définissant entre elles une gorge (98) annulaire recevant le joint torique (86)

5. Dispositif de refroidissement (30) selon l'une des revendications 1 à 4, dans lequel une surface interne de la bague (88) et une surface externe du tube (84) présentent des filetages correspondants, agencés pour permettre la fixation de la bague (88) à l'embase (80).

6. Dispositif de refroidissement (30) selon l'une des revendications 1 à 5, dans lequel la bague (88) et le tube (84) présentent des moyens d'encliquetage correspondants, agencés pour permettre la fixation de la bague (88) à l'embase (80).

7. Dispositif de refroidissement (30) selon la revendication 6, dans lequel lesdits moyens d'encliquetage comprennent une pluralité de dents (100) réparties circonférentiellement sur la surface externe du tube (84) et s'étendant en saillie radialement depuis ladite surface externe, et, préférentiellement, un même nombre d'indentations (102) correspondantes définies par la bague (88).

8. Dispositif de refroidissement (30) selon l'une des revendications 1 à 7, dans lequel une surface interne (106) du tube (84) présente des reliefs (108) agencés pour générer des turbulences dans un écoulement de fluide à travers le tube (84).

9. Dispositif de refroidissement (30) selon la revendication 8, dans lequel les reliefs (108) présentent des formes de rampes s'étendant sur la surface interne (106) du tube selon une direction transverse à une direction d'élongation locale du tube (84), en saillie vers l'intérieur du tube (84).

10. Batterie électrique (10) comprenant :
- une pluralité d'éléments de batterie (14) disposés dans une enceinte (12),
- un dispositif de circulation de fluide de refroidissement, et
- un dispositif de refroidissement (30) selon l'une des revendications précédentes, chaque connecteur fluidique (50) du dispositif de refroidissement étant connecté fluidiquement au dispositif de circulation de fluide de refroidissement,
l'enveloppe (32) étant disposée pour entrer en contact avec des éléments à refroidir des éléments de batterie lorsqu'un fluide de de refroidissement circule dans l'au moins un conduit (52) de circulation.
